# EUROPEAN PATENT SPECIFICATION

(11) **EP 2 545 979 B1**
(45) Date of publication and mention of the grant of the patent: **27.03.2019**
(21) Application number: 11753176.4
(22) Date of filing: 22.02.2011
(51) Int. Cl.: F24F 110/10, F24F 11/79, F24F 13/22, B01D 53/26, F24F 3/14

(54) **DEHUMIDIFIER**
ENTFEUCHTER
DÉSHUMIDIFICATEUR

(30) Priority: 08.03.2010 JP 2010050445
(43) Date of publication of application: 16.01.2013
(73) Proprietor: Mitsubishi Electric Corporation, Tokyo 100-8310 (JP); Mitsubishi Electric Home Appliance Co., Ltd., Fukaya-shi, Saitama 369-1295 (JP)
(72) Inventor: KABETA, Noriyoshi, Tokyo 102-0073 (JP); AKAMATSU, Hisayuki, Fukaya-shi Saitama 369-1295 (JP); ARAI, Satoshi, Tokyo 102-0073 (JP); WAKAI, Hiroshi, Fukaya-shi Saitama 369-1295 (JP)
(74) Representative: Zacco Sweden AB
(86) International application number: PCT/JP2011/053762
(87) International publication number: WO 2011/111514

(56) References cited:
- JP-A- 2002 340 387
- JP-A- 2002 340 387
- JP-A- 2005 315 454
- JP-A- 2007 240 100
- JP-A- 2008 023 486
- JP-A- 2009 192 165
- JP-A- 2009 250 527
- JP-A- 2009 250 527

## Description

### TECHNICAL FIELD

The present invention relates to a dehumidifier which dries the dew condensation occurring on window panes and walls, for example.

### BACKGROUND ART

In conventional dehumidifiers, control means compares the result of temperature detection by infrared detection means with the result of temperature detection of the indoor atmosphere by temperature detection means, whereby a judgment is made on a sensible heat decrease due to the evaporation of the moisture absorbed by an object to be dried, and the location of the distribution of temperatures lower than the room temperature due to a sensible heat decrease of the object to be dried is judged to be in the range of arrangement of the object to be dried (refer to Patent Literature 1, for example).

JP 2002 340387 discloses an air conditioner providing a function relating to dehumidification, in which an unnecessary dehumidifying operation is avoided to eliminate wasteful power consumption. It also protects a wall surface in contact with indoor air from condensation formation. The air conditioner comprises an operational element for condensation of humidity and a control means. The operational element performs operation for indoor-air humidity from wall-surface temperature and indoor-air temperature at the time of forming condensation on the wall surface. The control means controls a dehumidifying operation with a humidity operated by the condensation-humidity operating part as an aimed humidity.

JP 2002 340387 thereby discloses a dehumidifier according to the preamble of claim 1.

### Citation List

### Patent Literature

Patent literature 1: Japanese Patent Laid-Open No. 2007-240100 (Claims, Figures 3 to 5)

### SUMMARY OF INVENTION

### Technical Problem

However, although in the above-described conventional dehumidifiers, the location of a temperature distribution lower than the room temperature is in the arrangement range of an object to be dried, a low-temperature area exists in some parts of the room and this area may be judged to be in the arrangement range of an object to be dried and hence there is a possibility that it is impossible to cause the dry air to strike with good efficiency.

The present invention was made in order to solve the problem described above, and it is an object of the invention to provide a dehumidifier which detects a place having the lowest temperature in the room without error and causes the dry air to strike the place in a concentrated manner.

### Means for Solving the Problems

A dehumidifier according to the present invention is defined in claim 1. Preferred embodiments are defined in claims 2 and 3.

### Advantageous Effects of Invention

In the present invention, upon detection of the start of a removal operation of dew condensation in the room, the blowing direction of the wind direction changing means is controlled so that the surface temperature detection means moves on a predetermined route in a surface temperature detection range obtained by changing the blowing direction of the wind direction changing means vertically and laterally, and the surface temperatures on the predetermined route detected by the surface temperature detection means are read. And the lowest surface temperature is selected from the read surface temperatures and the wind direction changing means is controlled so that the dry air is blown in the direction of the lowest surface temperature. As a result of this, it is possible to swiftly detect a place of the lowest temperature in the room and to perform drying with good efficiency.

### BRIEF DESCRIPTION OF THE DRAWINGS

Figure 1 is an appearance perspective view showing a dehumidifier of an embodiment.
Figure 2 is a schematic configuration view showing the inside of the dehumidifier of the embodiment.
Figure 3 is a schematic perspective view enlargedly showing wind direction changing means shown in Figure 1.
Figure 4 is a schematic diagram showing the moving route of an infrared sensor used in detecting the dew condensation of a window pane, for example.
Figure 5 is a flowchart showing the actions of a dew condensation removal operation in the dehumidifier of the embodiment.

### DESCRIPTION OF EMBODIMENT

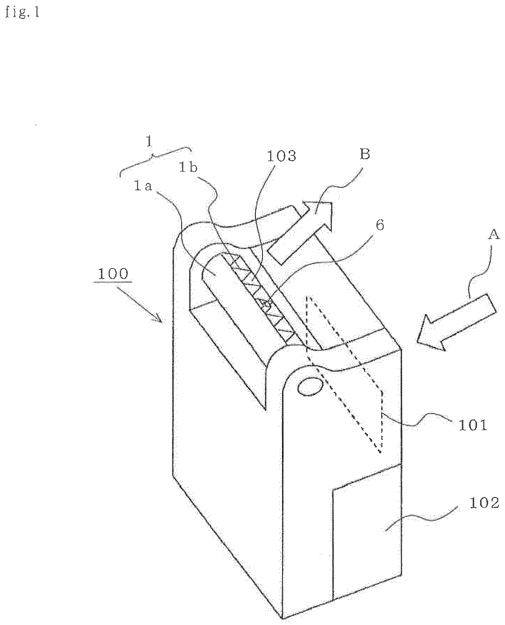

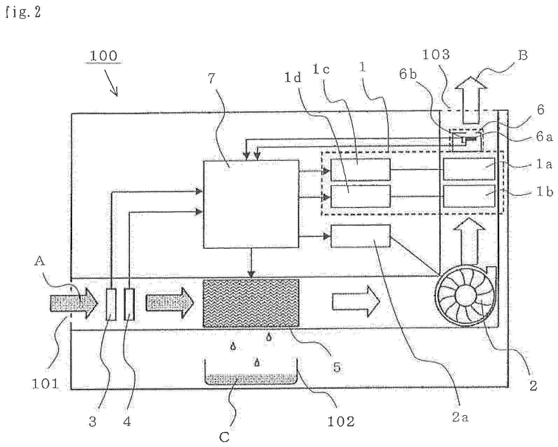

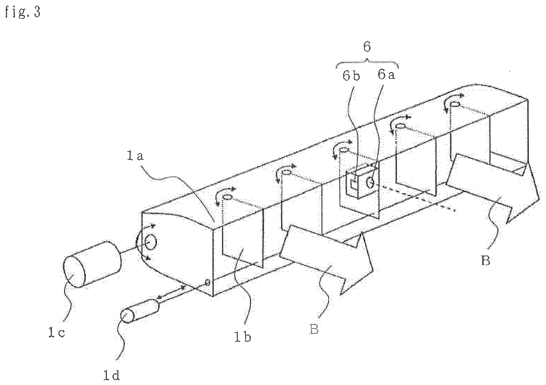

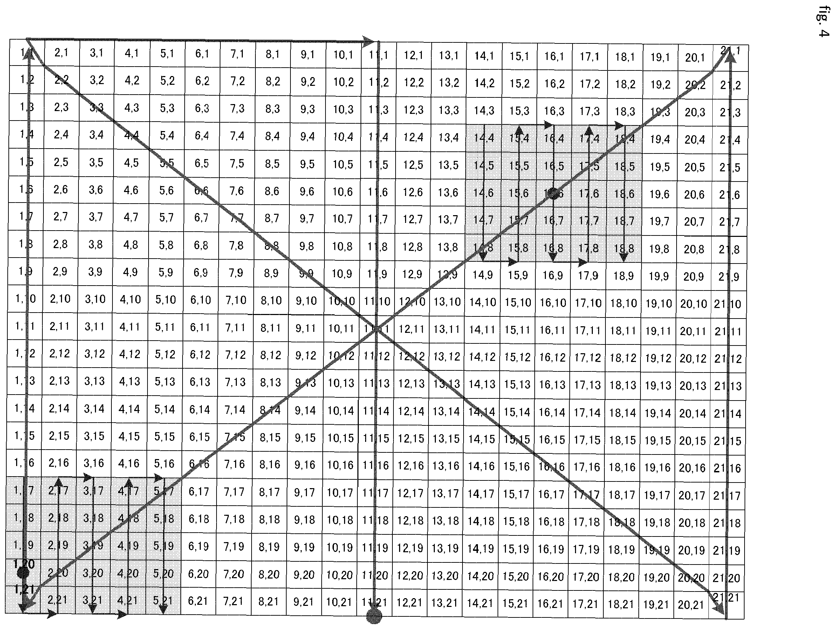

Figure 1 is an appearance perspective view showing a dehumidifier of an embodiment, Figure 2 is a schematic configuration view showing the inside of the dehumidifier of the embodiment, Figure 3 is a schematic perspective view enlargedly showing wind direction changing means of Figure 1, and Figure 4 is a schematic diagram showing the moving route of an infrared sensor used in detecting the dew condensation of a window pane, for example.

As shown in Figure 1, the dehumidifier of this embodiment is made up of a dehumidifier cabinet 100, an air intake port 101 for taking the room air A into the dehumidifier cabinet 100, a water storage tank 102 which stores the moisture removed from the air taken into the air intake port 101, and an air outlet port 103 which discharges the moisture-removed dry air B from the dehumidifier cabinet 100 into a room. The air outlet port 103 is composed of wind direction changing means 1 which can change the wind direction of the dry air B. The wind direction changing means 1 is made up of a longitudinal louver 1a which changes the vertical wind direction and a lateral louver 1b which changes the horizontal wind direction. The water storage tank 102 is detachably mounted to the dehumidifier cabinet 100.

As shown in Figure 2, the above-described dehumidifier is provided with an blowing fan 2 that generates an airflow that draws in the room air A through the air intake port 101 and discharges the dry air B through the air outlet port 103, a fan motor 2a which rotates the blowing fan 2, a temperature sensor 3 which detects the temperature of the room air A drawn in through the air intake port 101, a humidity sensor 4 which detects the humidity of the room air A, a dehumidifying means 5 which generates the dry air B by removing the moisture contained in the room air A, a longitudinal direction changing motor 1c which changes the longitudinal louver 1a in the vertical direction, a lateral direction changing motor 1d which changes the lateral louver 1b in the horizontal direction, an infrared ray sensor 6 that is a surface temperature detection means, and a control circuit 7 having a control means.

It is necessary only that the dehumidification means 5 be capable of condensing the moisture in the air by removing the moisture, and for example, as the most common means, there are used the method which involves constituting a heat pump circuit and condensing the moisture in the air in a vaporizer and the desiccant method which involves condensing the moisture in the air removed by an adsorbent by use of a heat exchanger. The moisture removed from the room air A by the dehumidification means 5 is stored in the water storage tank 102 as the condensate water C.

As shown in Figure 3, the longitudinal louver 1a has a rectangular opening extending in the width direction of the dehumidifier cabinet 100 and is constructed so that the direction thereof can be changed vertically with the rotating shaft of the above-described longitudinal direction changing motor 1c substantially as an axis. The lateral louvers 1b are arranged at equal intervals in the longitudinal louver 1a, are pivotally supported by the inner portions on the side opposite to the opening of the longitudinal louver 1a so that the directions thereof can be changed in the horizontal direction, and are configured so as to be moved in association with the drive of the above-described lateral direction changing motor 1d.

The infrared sensor 6 is attached to one surface of a lateral louver 1b arranged within the longitudinal louver 1a substantially at the middle. As a result of this, the infrared sensor 6 detects the surface temperature of an object, for example, window panes and walls present in the blowing direction of the wind direction changing means 1. The detection range of the infrared sensor 6 is on the inner side of a blowing range obtained by changing the blowing direction of the wind direction changing means 1 vertically and laterally. The infrared sensor 6 is, for example, one which uses the thermo electromotive effect is used, and is composed of an infrared ray absorbing film 6a which receives the heat radiations (infrared rays) generated from a surface in the detection range, and a thermistor 6b which detects the temperature of the infrared ray absorbing film 6a (see Figures 2 and 3). This infrared sensor 6 converts a difference between the temperature of a thermo sensitive portion of the infrared ray absorbing film 6a (hot junction) whose temperature rises by absorbing heat radiations and the temperature of the infrared ray absorbing film 6a which is detected by the thermistor 6b (cold junction) to an electrical signal such as voltage, and inputs the electrical signal to the control circuit 7, which will be described later. A surface temperature in the detection range can be discriminated from the size of this electrical signal.

In this embodiment, for example as shown in Figure 4, the detection range of the infrared sensor 6 is divided laterally into 21 blocks and longitudinally into 21 blocks, a total of 441 blocks, coordinates are set for the arrangement position of each block, and the detection range is set in the control circuit 7 using the coordinates as data. The reason for this is that the surface temperature of each block detected by the infrared sensor 6 is recorded when the infrared sensor 6 is moved on the predetermined route shown in Figure 4 (thick lines).

When dew condensation is detected, first, the louvers 1a, 1b are varied so that the infrared sensor 6 faces the block of coordinates (1, 1), which is the initial position of the detection range, and subsequently the louvers 1a, 1b are varied so that the infrared sensor 6 moves on the diagonal lines connecting the blocks of coordinates (1, 1) and coordinates (21, 21). In this case, the infrared sensor 6 can be moved on the diagonal lines by making the variable speed of the lateral louver 1b faster than that of the longitudinal louver 1a. Next, only the longitudinal louver 1a is varied so that the infrared sensor 6 moves on the vertical lines from the block of coordinates (21, 21) to the block of coordinates (21, 1). After that, the louvers 1a, 1b are varied so that the infrared sensor 6 moves on the diagonal lines connecting the blocks of coordinates (21, 1) and coordinates (1, 21). In the same manner as described above, also in this case, this is made possible by making the variable speed of the lateral louver 1b faster than that of the longitudinal louver 1a.

Furthermore, only the longitudinal louver 1a is varied so that the infrared sensor 6 moves on the vertical line from the block of coordinates (1, 21) to the block of coordinates (1, 1). After that, only the lateral louver 1b is varied so that the infrared sensor 6 moves to the block of coordinates (11, 1) at the middle of the lateral direction of the detection range. Subsequently, in order to ensure that the infrared sensor 6 moves on the vertical line from the block of coordinates (11, 1) to the block of coordinates (11, 21), the lateral louver 1b turned forward and the longitudinal louver 1a is varied downward. When the orientation of the infrared sensor 6 has reached the block of coordinates (11, 21), the variable speed of the longitudinal louver 1a and the variable speed of the lateral louver 1b are made almost the same, the infrared sensor 6 is moved to the block of coordinates (1, 1), which is the initial position, and the above-described actions are repeated. The control of the variable speed of the longitudinal louver 1a and the lateral louver 1b are performed through the control of the rotation speed of the longitudinal direction changing motor 1c and the lateral direction changing motor 1d by the control circuit 7.

When the selection of an ordinary dehumidification mode from an operating switch of an operation section, which is not shown, has been detected, the above-described control circuit 7 permits blowing from the air outlet port 103 by driving the longitudinal direction changing motor 1c and lateral direction changing motor 1d of the wind direction changing means 1, rotates the blowing fan 2 by driving the fan motor 2a, and drives the humidification means 5. After that, the control circuit 7 changes the direction of the louvers 1a, 1b by controlling the longitudinal direction changing motor 1c and lateral direction changing motor 1d of the wind direction changing means 1 so that the dry air B is blown in the direction of a desired region in the room. As a result of this, the room air A is taken from the air intake port 101 into the dehumidifier cabinet 100 and the temperature and humidity of the room are detected by the temperature sensor 3 and the humidity sensor 4, after which the room air A is dehumidified by the dehumidification means 5 and becomes the dry air B, which is blown out into the room from the air outlet port 103.

Furthermore, upon detection of the start of a dew condensation removal operation, the control circuit 7 controls the blowing direction of the wind direction changing means 1 to ensure that the infrared sensor 6 faces the initial position, which will be described in detail in the description of actions. Subsequently, the control circuit 7 controls the blowing direction of the wind direction changing means 1 so that the infrared sensor 6 moves on a predetermined route, and at the same time reads the surface temperature of each block on the predetermined route detected by the infrared sensor 6 (thick lines of Figure 4). After that, the control circuit 7 selects the lowest surface temperature from the read surface temperatures and makes a judgment as to whether the surface temperature is lower than a predetermined value. When the lowest surface temperature is lower than the predetermined value, the control circuit 7 judges that dew condensation has occurred, and controls the blowing direction of the wind direction changing means 1 so that the dry air is blown to the block of the surface temperature and the blocks in a predetermined range enclosing this block.

The above-described predetermined value is a value obtained, for example, by subtracting predetermined ΔT from a room temperature detected by the temperature sensor 3. Incidentally, when the room temperature is 20°C, for example, a predetermined value is not sought, and 20°C is used as the predetermined value, which is compared with the lowest surface temperature.

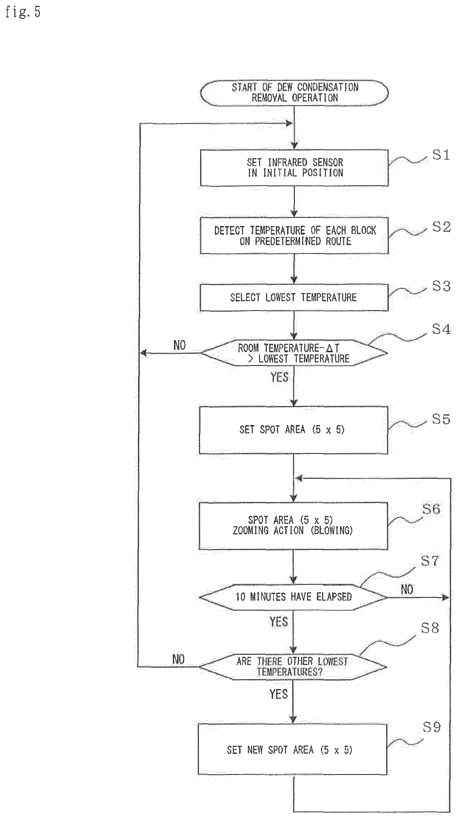

Next, with reference to Figure 5, a description will be given of actions taken when a dew condensation removal operation is selected.

Figure 5 is a flowchart showing the actions of a dew condensation removal operation in the dehumidifier of the embodiment.

Upon detection of the start of a dew condensation removal operation, the control circuit 7 of the dehumidifier permits blowing from the air outlet port 103 by driving the longitudinal direction changing motor 1c and lateral direction changing motor 1d of the wind direction changing means 1, rotates the blowing fan 2 by driving the fan motor 2a, and drives the humidification means 5. After that, the control circuit 7 controls the longitudinal direction changing motor 1c and the lateral direction changing motor 1d so that the infrared sensor 6 faces the block of coordinates (1, 1) which is the initial position of the detection range of the infrared sensor 6 (S1). Subsequently, the control circuit 7 controls the longitudinal direction changing motor 1c and the lateral direction changing motor 1d so that the infrared sensor 6 moves in order on the routes of thick lines shown in Figure 4, and at the same time reads the surface temperature (hereinafter referred to merely as "temperature") of each block on the predetermined route (thick lines of Figure 4) which are detected by the infrared sensor 6 (S2).

And the control circuit 7 selects the lowest temperature from the read temperatures of the blocks (S3), and makes a judgment as to whether the lowest temperature is lower than a predetermined value (room temperature - ΔT) (S4). When the lowest temperature is higher than the predetermined value, the control circuit 7 moves the infrared sensor 6 present in the block of coordinates (11, 21) to the block of coordinates (1, 1), which is the initial position (S1), and repeats the above-described actions.

When the selected lowest temperature is lower than the predetermined value, the control circuit 7 sets the block of the lowest temperature and a predetermined range enclosing the block. For example, in the case where the coordinates of the block of the lowest temperature lower than a predetermined value are (16, 6) as shown in Figure 4, the control circuit 7 sets X-coordinate - 2 at the left end and X-coordinate + 2 at the right end, the coordinates serving as the centre. Furthermore, the control circuit sets, as a spot area, the area of the block in a range where Y-coordinate - 2 is at the top end and Y-coordinate + 2 is at the bottom end, coordinates (16, 6) serving as the centre, i.e., the area of 5 x 5 blocks (S5).

And the control circuit 7 causes the dry air B to strike the block of the initial coordinates (14, 4) of the spot area by turning the louvers 1a, 1b toward this block, varies only the longitudinal louver 1a downward from the position, and moves only the lateral louver 1b rightward by one block when the blowing direction of dry air B reaches coordinates (14, 8). Subsequently, the control circuit 7 varies only the longitudinal louver 1a upward from the position, and moves only the lateral louver 1b rightward by one block when the blowing direction of dry air B reaches coordinates (15, 4). The control circuit 7 repeats the action, and when the blowing direction of dry air B reaches coordinates (18, 8), makes a judgment as to whether, for example, 10 minutes set beforehand have elapsed (S7). When 10 minutes have not elapsed, the control circuit 7 turns the louvers 1a, 1b so that the dry air B strikes the block of the initial coordinates again, and repeats the above-described actions (S6).

When 10 minutes have elapsed during the repeated blowing of the dry air B to the set spot area, the control circuit 7 makes a judgment as to whether there exit other lowest temperatures lower than the predetermined value on the predetermined route (S8). For example, in the case where as shown in Figure 4 the coordinates of a block having the lowest temperature lower than the predetermined value are (1, 20), the control circuit 7 sets, as a new spot area, the area of 5 x 5 blocks where X-coordinates + 4 is at the right end, the coordinates serving as the centre, and Y-coordinate - 3 is at the top end and Y-coordinate + 1 is at the bottom end, the coordinates serving as the centre (S9). After that, for 10 minutes in the same manner as described above, the control circuit 7 causes the dry air B to strike the new spot area by varying the louvers 1a, 1b. When in S8 the control circuit 7 judges that there is no other lowest temperature lower than the predetermined value on the predetermined route, the processing returns to S1, and the control circuit 7 repeats the above-described series of actions.

Furthermore, after the finish of the blowing of the dry air B to the new spot area, in the case where, for example, the temperature of the block of coordinates (1, 15) is lower than the predetermined value, the control circuit 7 sets, as a spot area, the area of 5 x 5 blocks where X-coordinates + 4 is at the right end, the coordinates serving as the centre, and Y-coordinate - 3 is at the top end and Y-coordinate + 1 is at the bottom end, the coordinates serving as the centre. The reason why Y-coordinate + 1 is adopted in this spot area is that an overlapping relation to the prior new spot area is avoided thereby.

As described above, according to this embodiment, during a dew condensation removal operation, the blowing direction of the wind direction changing means 1 is controlled so that the infrared sensor 6 moves on a predetermined route in the detection range of the infrared sensor 6, and the temperatures (surface temperatures) of each block on the predetermined route detected by the infrared sensor 6 are read. And the lowest temperature is selected from the read temperatures and when the selected lowest temperature is lower than a predetermined value, the blowing direction of the wind direction changing means 1 is controlled so that the dry air B is blown to the block of the lowest temperature and to a spot area in a predetermined range (5 x 5 blocks) enclosing the block. As a result of this, it is possible to swiftly detect dew condensation occurring on the window panes and walls without error and it is possible to perform drying with good efficiency.

Incidentally, in this embodiment, the size of the spot area to which the dry air B is blown is 5 x 5 blocks. However, the size is not limited to this, and the spot area may be 7 x 7 blocks or 9 x 9 blocks, for example.

Furthermore, because the temperature distribution in the room becomes almost uniform in rainy seasons and the like, it is possible to add control permitting switching to wide blowing instead of spot blowing in order to circulate the air in the whole room.

### Industrial Applicability

The present invention can be applied to a dehumidifier which dries dew condensation occurring, for example, on wind panes and walls.

### Description of Symbols

1 wind direction changing means, 1a longitudinal louver, 1b lateral louvers, 1c longitudinal direction changing motor, 1d lateral direction changing motor, 2 blowing fan, 2a fan motor, 3 temperature sensor, 4 humidity sensor, 5 dehumidifying means, 6 infrared ray sensor, 6a infrared ray absorbing film, 6b thermistor, 7 control circuit, 100 dehumidifier cabinet, 101 air intake port, 102 water storage tank, 103 air outlet port, A room air, B dry air.

## Claims

1. A dehumidifier which comprises dehumidifying means (5) configured for removing moisture contained in the air;
air blowing means configured for drawing in room air and blowing out dry air, which is obtained by causing the room air to pass through the dehumidifying means (5), into a room;
wind direction changing means (1) configured for changing a blowing direction of the dry air;
surface temperature detection means (6) configured for detecting surface temperatures of an object present in the blowing direction of the wind direction changing means (1) in a non-contact state; and
control means (7) configured for controlling the blowing direction of the wind direction changing means (1) and reading the surface temperatures detected by the surface temperature detection means (6),
**characterized in that**
the wind direction changing means (1) is configured for changing the blowing direction of the dry air vertically and laterally,
the surface temperature detection means (6) is attached to the wind direction changing means (1), and
the control means (7) is configured for, upon detection of the start of a removal operation of dew condensation in the room, controlling the blowing direction of the wind direction changing means (1) so that the surface temperature detection means (6) moves on a predetermined route in a surface temperature detection range which is divided into a plurality of blocks and is obtained by changing the blowing direction of the wind direction changing means (1) vertically and laterally, and also reading the surface temperatures on the predetermined route detected by the surface temperature detection means (6), and selecting the lowest surface temperature from the read surface temperatures and controlling the wind direction changing means (1) so that the dry air is blown in the direction of the lowest surface temperature
wherein the control means (7) is configured for, in blowing the dry air in the direction of the lowest surface temperature, setting an area of a predetermined range which is composed of the block of the lowest surface temperature and the blocks in a predetermined range enclosing the block of the lowest surface temperature, and controlling the wind direction changing means (1) so that the dry air is blown into each block in the area sequentially.

2. The dehumidifier according to claim 1, wherein the control means (7) is configured for, upon selecting the lowest surface temperature from the read surface temperatures, making a judgment as to whether the lowest surface temperature is lower than a predetermined value, and controlling the wind direction changing means (1) so that the dry air is blown in the direction of the lowest surface temperature when the lowest surface temperature is lower than the predetermined value.

3. The dehumidifier according to claim 1 or 2, wherein the predetermined route is configured for including two diagonal lines which pass through the centre of the surface temperature detection range.

## Patentansprüche

1. Entfeuchter, umfassend ein Entfeuchtungsmittel (5), das konfiguriert ist, um in der Luft enthaltene Feuchtigkeit zu entfernen;
ein Luftgebläsemittel, das konfiguriert ist, um Raumluft anzusaugen und trockene Luft auszublasen, die dadurch erhalten wird, dass bewirkt wird, dass die Raumluft durch das Entfeuchtungsmittel (5) in einen Raum strömt;
ein Windrichtungsänderungsmittel (1), das konfiguriert ist, um eine Blasrichtung der trockenen Luft zu ändern;
ein Oberflächentemperaturerfassungsmittel (6), das konfiguriert ist, um Oberflächentemperaturen eines in der Blasrichtung des Windrichtungsänderungsmittels (1) vorhandenen Objekts in einem kontaktlosen Zustand zu erfassen; und
ein Steuermittel (7), das konfiguriert ist, um die Blasrichtung des Windrichtungsänderungsmittels (1) zu steuern und die Oberflächentemperaturen, die durch das Oberflächentemperaturerfassungsmittel (6) erfasst werden, zu lesen
**dadurch gekennzeichnet, dass**
das Windrichtungsänderungsmittel (1) konfiguriert ist, um die Blasrichtung der trockenen Luft vertikal und lateral zu ändern,
das Oberflächentemperaturerfassungsmittel (6) am Windrichtungsänderungsmittel (1) befestigt ist, und
das Steuermittel (7) konfiguriert ist, um bei Erkennen des Beginns einer Entfernung von Taukondensation im Raum die Blasrichtung des Windrichtungsänderungsmittels (1) zu steuern, so dass sich das Oberflächentemperaturerfassungsmittel (6) auf einer vorgegebenen Route in einem Oberflächentemperaturerfassungsbereich bewegt, der in eine Vielzahl von Blöcken unterteilt ist und durch Veränderung der Blasrichtung des Windrichtungsänderungsmittels (1) vertikal und lateral erhalten wird, und außerdem die Oberflächentemperaturen auf der vorbestimmten Route, die durch das Oberflächentemperaturerfassungsmittel (6) erfasst wurden, zu lesen und die niedrigste Oberflächentemperatur aus den gelesenen Oberflächentemperaturen auszuwählen und das Windrichtungsänderungsmittel (1) so zu steuern, dass die trockene Luft in die Richtung der niedrigsten Oberflächentemperatur geblasen wird,
wobei das Steuermittel (7) konfiguriert ist, um beim Blasen der trockenen Luft in die Richtung der niedrigsten Oberflächentemperatur eine Region eines vorbestimmten Bereichs einzustellen, der sich aus dem Block mit der niedrigsten Oberflächentemperatur und den Blöcken in einem vorbestimmten Bereich zusammensetzt, die den Block mit der niedrigsten Oberflächentemperatur umschließen, und das Windrichtungsänderungsmittels (1) so zu steuern, dass die trockene Luft in jeden Block in der Region nacheinander eingeblasen wird.

2. Entfeuchter nach Anspruch 1, wobei das Steuermittel (7) konfiguriert ist, um bei der Auswahl der niedrigsten Oberflächentemperatur aus den gelesenen Oberflächentemperaturen ein Urteil zu fällen, ob die niedrigste Oberflächentemperatur niedriger als ein vorbestimmter Wert ist, und um das Windrichtungsänderungsmittel (1) so zu steuern, dass die trockene Luft in die Richtung der niedrigsten Oberflächentemperatur geblasen wird, wenn die niedrigste Oberflächentemperatur niedriger ist als der vorbestimmte Wert ist.

3. Entfeuchter nach Anspruch 1 oder 2, wobei die vorbestimmte Route konfiguriert ist, um zwei diagonale Linien einzuschließen, die durch die Mitte des Oberflächentemperaturerfassungsbereichs verlaufen.

## Revendications

1. Déshumidificateur qui comprend un moyen de déshumidification (5) configuré pour éliminer de l'humidité contenue dans l'air ;
un moyen de soufflage d'air configuré pour aspirer l'air de la pièce et souffler de l'air sec, qui est obtenu en amenant l'air de la pièce à passer à travers le moyen de déshumidification (5), dans une pièce ;
un moyen de changement de direction de souffle (1) configuré pour changer une direction de soufflage de l'air sec ;
un moyen de détection de température de surface (6) configuré pour détecter la température de surface d'un objet présent dans la direction de soufflage du moyen de changement de direction de souffle (1) dans un état sans contact ; et
un moyen de commande (7) configuré pour commander la direction de soufflage du moyen de changement de direction de souffle (1) et pour lire les températures de surface détectées par le moyen de détection de température de surface (6),
**caractérisé en ce que**
le moyen de changement de direction de souffle (1) est configuré pour changer la direction de soufflage de l'air sec verticalement et latéralement,
le moyen de détection de température de surface (6) est fixé au moyen de changement de direction de souffle (1), et
le moyen de commande (7) est configuré pour, lors d'une détection du début d'une opération d'élimination de condensation de rosée dans la pièce, commander la direction de soufflage du moyen de changement de direction de souffle (1) de sorte que le moyen de détection de température de surface (6) se déplace sur une voie prédéterminée dans une plage de détection de température de surface qui est divisée en une pluralité de blocs et est obtenue en changeant la direction de soufflage du moyen de changement de direction de souffle (1) verticalement et latéralement, et également pour lire les températures de surface sur la voie prédéterminée, détectées par le moyen de détection de température de surface (6), et pour sélectionner la température de surface la plus basse à partir des températures de surface lues et pour commander le moyen de changement de direction de souffle (1) de sorte que l'air sec est soufflé dans la direction de la température de surface la plus basse
dans lequel le moyen de commande (7) est configuré pour, en soufflant l'air sec dans la direction de la température de surface la plus basse, définir une zone d'une plage prédéterminée qui est composée du bloc de la température de surface la plus basse et des blocs dans une plage prédéterminée entourant le bloc de la température de surface la plus basse, et pour commander le moyen de changement de direction de souffle (1) de sorte que l'air sec est soufflé dans chaque bloc dans la zone séquentiellement.

2. Déshumidificateur selon la revendication 1, dans lequel le moyen de commande (7) est configuré pour, lors de la sélection de la température de surface la plus basse parmi les températures de surface lues, juger si la température de surface la plus basse est inférieure à une valeur prédéterminée, et pour commander le moyen de changement de direction de souffle (1) de sorte que l'air sec est soufflé dans la direction de la température de surface la plus basse lorsque la température de surface la plus basse est inférieure à la valeur prédéterminée.

3. Déshumidificateur selon la revendication 1 ou 2, dans lequel la voie prédéterminée est configurée pour inclure deux lignes diagonales qui passent à travers le centre de la plage de détection de température de surface.
